# EUROPÄISCHE PATENTSCHRIFT

(11) **EP 1 196 881 B1**
(45) Veröffentlichungstag und Bekanntmachung des Hinweises auf die Patenterteilung: **22.01.2003**
(21) Anmeldenummer: 99928997.8
(22) Anmeldetag: 22.07.1999
(51) Int. Cl.: G06F 17/60, G06F 1/00, G07F 7/10

(54) **TRANSAKTIONSVERFAHREN UND DAFÜR GEEIGNETE VORRICHTUNGEN**
TRANSACTION METHOD AND SUITABLE DEVICES THEREFOR
PROCEDE DE TRANSACTION ET DISPOSITIFS ADAPTES

(43) Veröffentlichungstag der Anmeldung: 17.04.2002
(73) Patentinhaber: Swisscom Mobile AG, 3050 Bern (CH)
(72) Erfinder: LAUPER, Eric, CH-3012 Bern (CH); RITTER, Rudolf, CH-3052 Zollikofen (CH)
(74) Vertreter: BOVARD AG - Patentanwälte
(86) Internationale Anmeldenummer: CH9900338
(87) Internationale Veröffentlichungsnummer: WO01008056

(56) Entgegenhaltungen:
- WO-A-98/09227
- WO-A-98/10361
- US-A- 5 359 669
- US-A- 5 369 415

## Beschreibung

Die vorliegende Erfindung betrifft ein Transaktionsverfahren und dafür geeignete Vorrichtungen. Insbesondere betrifft die vorliegende Erfindung ein Transaktionsverfahren und dafür geeignete Vorrichtungen, in welchem Transaktionsverfahren Angaben zur Identifizierung eines Benutzers mit einer Objektidentifizierung eines Transaktionsobjekts, beispielsweise ein Produkt oder eine Dienstleistung, in einem Transaktionsbeleg verknüpft werden und der Transaktionsbeleg an eine Verarbeitungseinheit geleitet wird.

In bekannten Transaktionsverfahren, in denen ein Benutzer involviert ist, beispielsweise Bestellungstransaktionsverfahren, in denen Kunden Bestellungen für Produkte und/oder Dienstleistungen an ein Dienstleistungszentrum übermitteln, muss sich der Benutzer typischerweise mit einem Identifizierungsmodul, beispielsweise eine Kreditkarte, eine Kundenkarte oder eine SIM-Karte (Subscriber Identification Module), und/oder mit einem persönlichen Code (Passwort, PIN-Nummer) identifizieren. Der Nachteil dieser Verfahren besteht darin, dass die Identifizierungsmodule verloren oder gestohlen werden können, so dass, auch wenn die Verwendung durch Unberechtigte durch den zusätzlichen persönlichen Code erschwert wird, trotzdem noch das Problem besteht, dass ein betreffender Benutzer sich erst nach dem Erhalt eines Ersatzmoduls wieder korrekt identifizieren kann. Zudem bereitet es vielen Benutzern Mühe, die immer zahlreicher werdenden Identifizierungsmodule mit sich zu tragen und sich an die dazugehörenden persönlichen Codes zu erinnern.

In der Patentschrift US 5359669 wird ein Scanner beschrieben, der in zwei alternativen Modi so betrieben werden kann, dass er in einem ersten Modus das Retinamuster eines Benutzers erfasst und dass er in einem zweiten Modus dem Benutzer Bilder auf die Retina projiziert. Gemäss US 5359669 wird das erfasste Retinamuster zu Identifizierungszwecken an eine entfernte Einheit übertragen, wodurch ein gesichertes Kommunikationssystem realisiert werden kann.

In der Patentanmeldung WO 98/09227 werden ein Verfahren und ein System zur Abwicklung von Transaktionen beschrieben, in welchen von einem Benutzer ein biometrisches Merkmal, insbesondere ein Retinamuster, erfasst wird, nachdem ihm vom Verkäufer ein Transaktionsobjekt angeboten wurde. Gemäss WO 98/09227 wird das erfasste biometrische Merkmal des Benutzers in einem Transaktionsbeleg an ein Computer System übertragen. Anhand des empfangenen biometrischen Merkmals wird der Benutzer im Computer System identifiziert und die Transaktion bei positiver Identifizierung ausgeführt.

Es ist eine Aufgabe dieser Erfindung, ein neues und besseres Transaktionsverfahren, in welchem Benutzer involviert sind, sowie dafür geeignete Vorrichtungen vorzuschlagen, welche insbesondere nicht die erwähnten Nachteile aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass Objektbilddaten, die ein Transaktionsobjekt betreffen, beispielsweise ein Produkt oder eine Dienstleistung, für einen betreffenden Benutzer sichtbar gemacht werden, dass Augenmerkmale des Benutzers bestimmt werden, während die sichtbar gemachten Objektbilddaten durch den Benutzer betrachtet werden, und dass die bestimmten Augenmerkmale mit Objektdaten, die das Transaktionsobjekt betreffen und mindestens eine Objektidentifizierung enthalten, in einem Transaktionsbeleg verknüpft werden, welcher Transaktionsbeleg dann an eine Verarbeitungseinheit weitergeleitet werden kann. Der Vorteil dieses Transaktionsverfahrens besteht darin, dass Augenmerkmale als biometrisches Identifizierungsmittel verwendet werden und somit vom Benutzer keine herkömmlichen Identifizierungsmodule mehr getragen und keine zusätzlichen persönlichen Codes eingeprägt werden müssen. Die Objektbilddaten erlauben zudem dem Benutzer das betreffende Transaktionsobjekt zu visualisieren, beispielsweise in Form eines zwei- oder dreidimensionalen Bildes, in Form einer Grafik, in Form eines schriftlichen Texts oder mittels einer Kombination dieser verschiedenen Formen.

In einer bevorzugten Ausführungsvariante werden die Objektbilddaten für den Benutzer sichtbar gemacht, indem diesen Objektbilddaten entsprechende Bildsignale direkt auf die Retina des Benutzers projiziert werden. Je nach Ausführung können Bildsignale auf die Retina eines Auges oder auf die Retina beider Augen projiziert werden, wobei die Projektion auf die Retina beider Augen insbesondere für räumliche (dreidimensionale) Darstellungen vorteilhaft ist und stereoskopische Wahrnehmungen ermöglicht.

Vorzugsweise werden die Augenmerkmale dadurch bestimmt, dass von Augenteilen, beispielsweise die Regenbogenhaut (Iris) oder die Netzhaut (Retina), reflektiertes Licht mindestens von einem Teilgebiet dieser Augenteile erfasst und einem lichtempfindlichen Element zugeführt wird. Je nach Ausführungsvariante besteht die Möglichkeit, Augenmerkmale von Augenteilen beider Augen oder nur von einem Auge zu erfassen.

In einer bevorzugten Ausführungsvariante umfassen die Augenmerkmale mindestens das Retinamuster von einer Retina des betreffenden Benutzers, wobei das Retinamuster aus den bestimmten Reflexionsdaten und den zugehörigen Objektbilddaten, insbesondere durch eine Differenzoperation, bestimmt wird, wobei die Reflexionsdaten aus erfasstem Licht bestimmt werden, welches Licht durch die Retina auf Grund der projizierten, den Objektbilddaten entsprechenden Bildsignale reflektiert wird. Diese Ausführungsvariante hat den Vorteil, dass die Angaben zur Identifizierung eines Benutzers in einem untrennbaren Schritt ("atomic function") während der Betrachtung der sichtbar gemachten Bilddaten des Transaktionsobjekts durch diesen Benutzer erfolgt. Die bestimmten Reflexionsdaten repräsentieren nämlich eine (optische) Verknüpfung der Bilddaten des Transaktionsobjekts, welche mittels entsprechenden Bildsignalen direkt auf die Retina des Benutzers projiziert werden, und dem (oder den) Retinamuster dieses Benutzers. Die Bestimmung der eigentlichen Retinamuster aus den Reflexionsdaten kann in einer Verarbeitungseinheit durchgeführt werden, die sich in einer lokalen, beispielsweise mobilen, Vorrichtung beim Benutzer oder in einer vom Benutzer entfernten Dienstzentrale befindet. Im letzteren Fall werden die Transaktionsbelege über ein Telekommunikationsnetz, beispielsweise ein Festnetz oder ein Mobilnetz, zum Beispiel ein GSM- oder ein UMTS-, oder ein anderes, beispielsweise satellitenbasiertes Mobilfunknetz, an eine Verarbeitungseinheit in einer Dienstzentrale übermittelt. In entsprechenden Ausführungsvarianten werden die Objektbilddaten über ein Telekommunikationsnetz, beispielsweise ein Festnetz oder ein Mobilnetz, zum Beispiel ein GSM- oder ein UMTS-, oder ein anderes, beispielsweise satellitenbasiertes Mobilfunknetz, von einer Dienstzentrale bezogen.

Zur Weiterverarbeitung des Transaktionsbelegs werden in der Verarbeitungseinheit vorteilhafterweise Benutzerdaten bestimmt, die den Augenmerkmalen zugeordnet sind, wobei diese Benutzerdaten beispielsweise den Namen, die Zustelladresse, einen Verrechnungsmodus und gegebenenfalls eine Verrechnungsadresse und eventuelle weitere den Benutzer betreffende Angaben enthalten.

In einer Ausführungsvariante enthalten die Objektdaten zusätzlich eine Objektanbieteridentifizierung. Dies hat den Vorteil, dass der Transaktionsbeleg nicht nur Angaben zur Identifizierung eines betreffenden Benutzers und eines betreffenden Transaktionsobjekts enthält, sondern auch gleich den Dienstleister identifiziert, der für das Transaktionsobjekt zuständig ist, beispielsweise der Dienstleister, von welchem ein Produkt oder eine Dienstleistung bezogen werden kann oder der für die Finanztransaktion zuständig ist, welche mittels der entsprechenden Objektbilddaten für den Benutzer visualisiert wurde, so dass die Objektidentifizierung des Transaktionsobjekts und Benutzerdaten betreffend den interessierten Benutzer, beispielsweise als Objektbestellung oder als Finanztransaktion, an diesen Dienstleister weitergeleitet werden können.

Neben dem erfindungsgemässen Transaktionsverfahren bezieht sich die vorliegende Erfindung insbesondere auch auf eine Vorrichtung und eine Dienstzentrale zur Ausführung dieses Transaktionsverfahrens.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Datenflussdiagramm, in welchem schematisch ein möglicher Daten-/Signalfluss des erfindungsgemässen Transaktionsverfahrens dargestellt ist, und
Figur 2 zeigt ein Blockdiagramm, in welchem schematisch eine Vorrichtung und eine Dienstzentrale, die über ein Telekommunikationsnetz mit dieser Vorrichtung verbunden ist, zur Ausführung des erfindungsgemässen Transaktionsverfahrens illustriert werden.

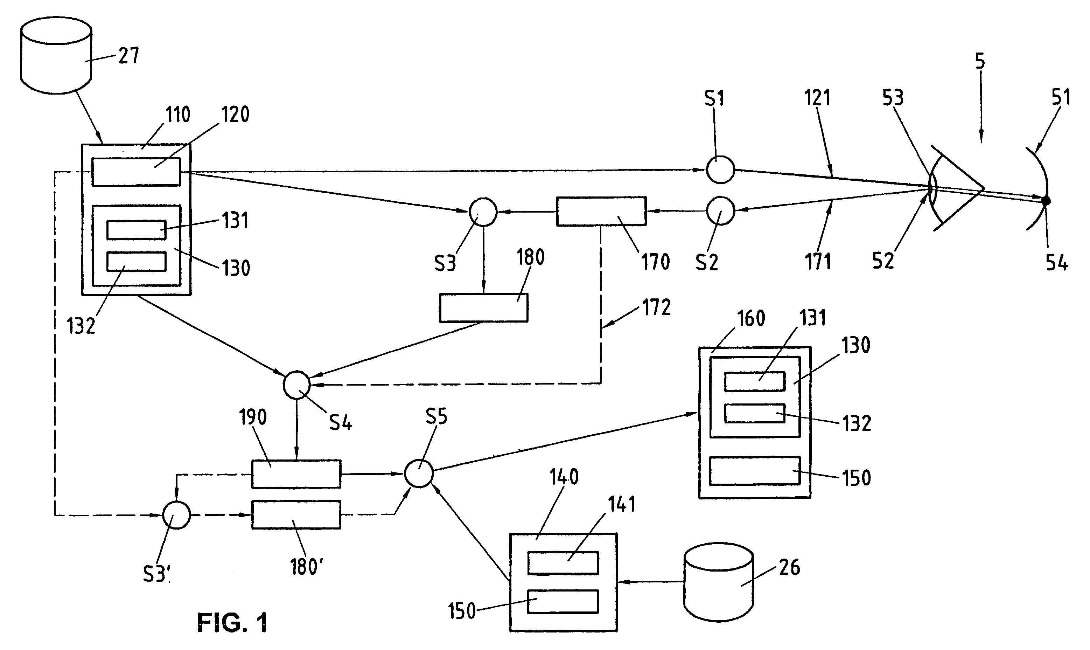

In der Figur 1 bezieht sich die Bezugsziffer 110 auf ein Transaktionsobjekt, welches in einer Objektdatenbank 27 gespeichert ist und Angaben über Objekte wie Produkte oder Dienstleistungen enthält. Das Transaktionsobjekt 110 enthält Objektdaten 130, die eine Objektidentifizierung 131 und eine Objektanbieteridentifizierung 132 umfassen, wobei die Objektanbieteridentifizierung 132 den Anbieter des betreffenden Produkts, respektive den Dienstleister der betreffenden Dienstleistung identifiziert. Das Transaktionsobjekt 110 enthält zudem Objektbilddaten 120, das heisst ein File mit digitalen, beispielsweise komprimierten, Bilddaten, die das Transaktionsobjekt 110 betreffen, beispielsweise ein Bild eines angebotenen Produkts oder eine erklärende Grafik einer angebotenen Dienstleistung und die einem interessierten Benutzer beispielsweise in Form eines zwei- oder dreidimensionalen Bildes, in Form einer Grafik, in Form eines schriftlichen Texts oder als Kombination dieser verschiedenen Formen als bewegte (Video) oder stehende Bilder sichtbar gemacht werden können. In einer Variante umfassen die Bilddaten zusätzlich auch Audiodaten (Multimediadaten), welche dem interessierten Benutzer mittels geeigneten elektro-akustischen Wandlern wiedergegeben werden können.

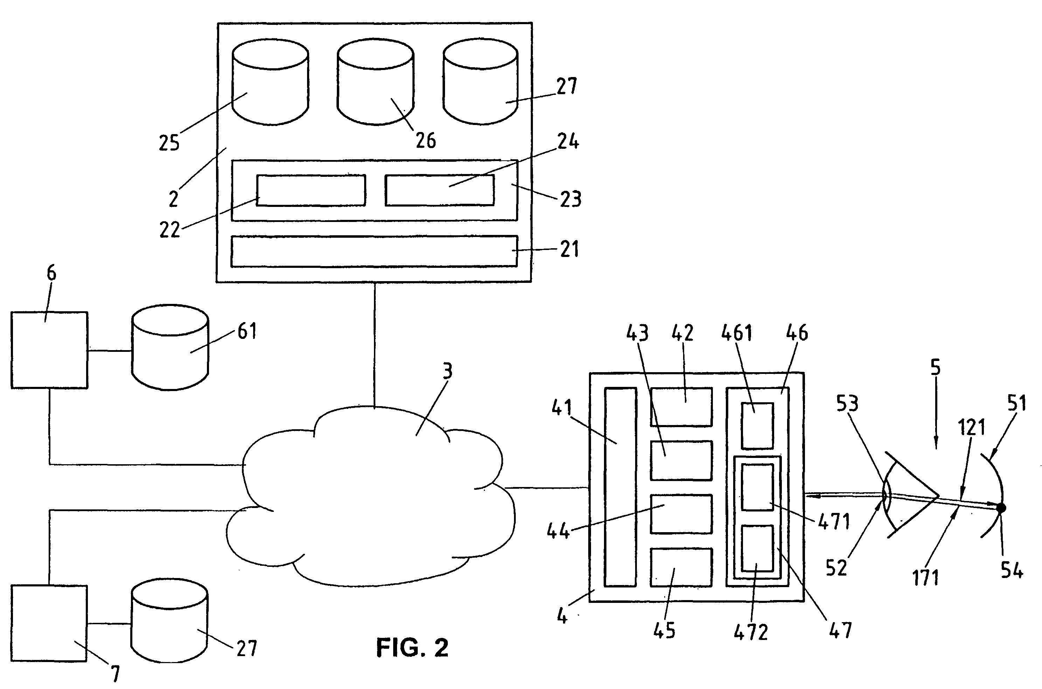

Wie in der Figur 2 illustriert wird, kann ein Benutzer der Vorrichtung 4 Transaktionsobjekte 110 über ein Telekommunikationsnetz 3, beispielsweise ein Festnetz oder ein Mobilnetz, beispielsweise ein GSM-, UMTS- oder ein anderes, beispielsweise satellitenbasiertes, Mobilfunknetz, aus einer Objektdatenbank 27 einer Dienstzentrale 2 oder direkt aus einer Objektdatenbank 27 eines Objektanbieters 7, respektive eines Dienstleisters 7, beziehen, beispielsweise mittels einem geeigneten Browser, beispielsweise ein WAP-basierter Browser (Wireless Application Protocol), oder einem anderen geeigneten programmierten Softwaremodul und unter Zuhilfenahme eines Kommunikationsmoduls 41. Transaktionsobjekte 110 können aber auch auf einem entfernbaren Datenträger, beispielsweise eine CD-ROM, in die Vorrichtung 4 geladen werden. Das Kommunikationsmodul 41 umfasst sämtliche Hard- und Softwarekomponenten um mit anderen Einheiten über das Telekommunikationsnetz 3 zu kommunizieren, das heisst, insbesondere Daten auszutauschen. Je nachdem ob die Vorrichtung 4 als festinstallierte Vorrichtung, beispielsweise in Form eines öffentlich zugänglichen Terminals oder als mobile Vorrichtung, ausgeführt ist, ist das Kommunikationsmodul 41 für ein Fest- oder Mobilnetz ausgelegt.

Wie in der Figur 1 dargestellt ist, werden aus einem entgegengenommenen Transaktionsobjekt 110 im Schritt S1 die Objektbilddaten 120 entnommen und den Objektbilddaten 120 entsprechende Bildsignale 121 direkt auf die Retina 51 des Benutzers projiziert, wobei, je nach Ausführung, Bildsignale 121 in die Retina 51 eines oder beider Augen 5 des betreffenden Benutzers projiziert werden. Wie in der Figur 2 dargestellt ist, umfasst die Vorrichtung 4 für diesen Zweck eine (virtuelle) retinale Anzeigevorrichtung 46.

Eine virtuelle retinale Anzeigevorrichtung (Virtual Retinal Display, VRD), welche Bildsignale direkt auf die Retina 51 eines Betrachters projizieren kann, wurde beispielsweise in den Patentanmeldungen WO 94/09472, WO 97/37339 und WO 98/13720 beschrieben. Diese virtuellen retinalen Anzeigevorrichtungen können über eine Videoschnittstelle mit Bilddaten versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann die in den erwähnten Patentschriften WO 94/09472, WO 97/37339 und WO 98/13720 beschriebene virtuelle retinale Anzeigevorrichtung, respektive die dort beschriebene Videoschnittstelle, so anzupassen, dass auch andere Formate von Bilddaten effizient entgegengenommen werden können. Mittels eines nicht dargestellten Schnittstellenmoduls können entgegengenommene Objektbilddaten aber auch geeignet an die Videoschnittstelle angepasst werden, respektive erhaltene Objektbilddaten 120 so umgewandelt werden, dass sie an die Videoschnittstelle angelegt und mittels der virtuellen retinalen Anzeigevorrichtung 46 für den Benutzer sichtbar gemacht werden können.

Wie in der Figur 2 schematisch dargestellt ist, umfasst die virtuelle retinale Anzeigevorrichtung 46 ein Augenpositionsbestimmungsmodul 461, welches aktuelle Augenpositionen des Benutzers beim Betrachten von Bildern bestimmen kann. Ein Augenpositionsbestimmungsmodul (Eye Tracker), welches aktuelle Augenpositionen basierend auf der Position der Pupille 52 eines Benutzers bestimmt, wurde ebenfalls in der oben erwähnten Patentanmeldung WO 94/09472 beschrieben und kann vom Fachmann so erweitert werden, dass die bestimmte Augenposition über eine geeignete Schnittstelle für andere Komponenten der Vorrichtung 4 verfügbar ist, insbesondere Komponenten, die ausserhalb der virtuellen retinalen Anzeigevorrichtung 46 liegen; je nach Ausführung können Werte für beide Augen verfügbar gemacht werden. Bestimmte aktuelle Augenpositionen können beispielsweise dazu verwendet werden die Projektion der Bildsignale 121 auf die Retina 51 zu steuern, beispielsweise so, dass die vom Benutzer betrachteten Bildbereiche beim Benutzer auf das Gebiet der Retina mit der höchsten Auflösung, die Fovea Centralis, zu liegen kommen, oder sie können mit vordefinierten Positionswerten verglichen werden und bei einer Übereinstimmung von aktuellen und vordefinierten Augenpositionen können vordefinierte Funktionen ausgeführt werden, so dass eine eigentliche optische, durch Augenpositionen steuerbare Benutzerschnittstelle definiert werden kann, wobei die vordefinierten Positionen dem Benutzer bildlich, beispielsweise in Form von herkömmlichen GUI-Objekten (Graphical User Interface), dargestellt werden können.

In der Figur 1 wird im Schritt S2 das auf Grund der oben erwähnten Bildsignale 121 auf der Retina 51 reflektierte Licht 171 erfasst und aus den erfassten Lichtwerten werden Reflexionsdaten 170 generiert. Wie in der Figur 2 dargestellt wird, umfasst die Vorrichtung 4 für diesen Zweck einen geeigneten Scanner 47, der das von der Retina 51 reflektierte Licht 171 beispielsweise mittels eines Strahlteilers 471 (mindestens) einem lichtempfindlichen Element 472 zuführt. Ein solcher Scanner, der auch für mehrfarbige Bilder ausgeführt werden kann und sich zum Erfassen von Retinamustern eignet, insbesondere das durch die Blutadern der Retina gebildete Muster, wurde beispielsweise in der oben erwähnten Patentanmeldung WO 98/13720 beschrieben. Da die den Objektbilddaten 120 entsprechenden Bildsignale 121 von der virtuellen retinalen Anzeigevorrichtung 46, beispielsweise durch einen geeigneten mikroelektromechanischen beweglichen Spiegel, in einem Raster von Bildpunkten 54 auf die Retina 51 projiziert werden, entsprechen die über den Strahlteiler 471 dem (mindestens einen) lichtempfindlichen Element 472 zugeführten reflektierten Lichtstrahlen 171 dem selben Raster von reflektierten Bildpunkten 54, so dass den Objektbilddaten 120 entsprechende zugehörige Reflexionsdaten 170 erfasst werden können.

Die im (in den) lichtempfindlichen Element(en) 472 erfassten Lichtwerte werden beispielsweise im Datenerstellungsmodul 45 digitalisiert und, wie in der Figur 1 dargestellt, aus den dadurch erhaltenen Reflexionsdaten 170 und den entsprechenden zugehörigen Objektbilddaten 120 im Schritt S3 das Retinamuster 180 generiert, insbesondere mittels einer Differenzoperation. Der Schritt S3 kann sequentiell für jeden projizierten/reflektierten Bildpunkt 54 oder erst beim Vorliegen der Reflexionsdaten 170 für sämtliche projizierten/reflektierten Bildpunkte 54 durchgeführt werden. Das Datenerstellungsmodul 45 ist beispielsweise ein programmiertes Softwaremodul das auf einem Prozessor der Vorrichtung 4 ausgeführt wird oder ein Hardwaremodul, beispielsweise ein integrierter Schaltkreis, oder eine Kombination der beiden. In einer Variante werden die Retinamuster 180 beispielsweise nur generiert, wenn der Benutzer mittels eines Signals an die Vorrichtung 4, beispielsweise mittels eines nicht dargestellten Bedienungselements oder durch Augenpositionierung über die oben erwähnte optische Benutzerschnittstelle, angezeigt hat, dass er für das betreffende sichtbar gemachte Transaktionsobjekt 110 eine Transaktion einleiten möchte, das heisst zum Beispiel das entsprechende Produkt oder die entsprechende Dienstleistung anfordern möchte. In der Figur 2 ist das für die Bestimmung der Retinamuster 180 zuständige Retinabestimmungsmodul 44, welches als programmiertes Softwaremodul auf einem Prozessor der Vorrichtung 4 oder in Hardwareform, beispielsweise als integrierter Schaltkreis, ausgeführt ist, schematisch dargestellt. Auf eine alternative Ausführungsvariante, in der die Bestimmung der Retinamuster 180' in der Dienstzentrale 2 durchgeführt wird, wird später eingegangen. An dieser Stelle sollte erwähnt werden, dass in diesem bevorzugten Ausführungsbeispiel nur auf die Erfassung von Retinamustern als Augenmerkmale eingegangen wird, aber dass an deren Stelle auch (unabhängig von den Objektbilddaten) Muster der Iris (Regenbogenhaut) erfasst werden können.

Es ist auch möglich, dass für die Bestimmung der Retinamuster eine separate Lichtquelle, beispielsweise eine LED (Light Emitting Diode) oder ein Laser, verwendet wird, deren Lichtstrahlen, beispielsweise mittels geeignetem, mikroelektromechanischem beweglichen Spiegel, als Raster von Bildpunkten 54 auf die Retina 51 projiziert werden, so dass die erfassten Reflexionsdaten 170 - welche Reflexionsdaten 170, wie oben erwähnt, aus den reflektierten Lichtstrahlen 171 gewonnen werden, beispielsweise indem sie über einen Strahlteiler 471 einem lichtempfindlichen Element 472 zugeführt und im Datenerstellungsmodul 45 digitalisiert werden - ohne weitere Operationen ausführen zu müssen (insbesondere ohne Schritt S2) dem Retinamuster entsprechen, wobei diese direkte Erfassung der Retinamuster während der gleichzeitigen Betrachtung der Bilddaten 120 durch den Benutzer erfolgen kann, wenn die separate Lichtquelle Licht ausstrahlt, das andere Wellenlängen umfasst, als die den Bilddaten 120 entsprechenden Bildsignale 121, beispielsweise wenn diese Lichtquelle eine Infrarotlichtquelle ist, und wenn das verwendete lichtempfindliche Element 472 entsprechend für dieses Licht ausgelegt ist.

Der Fachmann wird verstehen, dass im Sinne der vorliegenden Erfindung von der virtuellen retinalen Anzeigevorrichtung 46 und vom Scanner 47 verwendete Komponenten, wie beispielsweise drehbare mikroelektromechanische Spiegel, Lichtquellen oder lichtempfindliche Elemente in verschiedenen Ausführungsvarianten von der Anzeigevorrichtung 46 und vom Scanner 47 kombiniert verwendet werden können oder für die Anzeigevorrichtung 46 und für den Scanner 47 jeweils separate Komponenten verwendet werden können. Es ist auch möglich, dass einzelne Komponenten, beispielsweise eine LED-Lichtquelle und ein lichtempfindliches Element, durch Komponenten mit kombinierter Funktion ersetzt werden können.

Wie in der Figur 1 dargestellt ist, werden im Schritt S4 die bestimmten Retinamuster 180 mit den Objektdaten 130 des betreffenden, sichtbar gemachten Transaktionsobjekts 110 in einem Transaktionsbeleg 190 verknüpft. Die Objektdaten 130 enthalten mindestens eine Objektidentifizierung 131, sie können aber zusätzlich auch eine Objektanbieteridentifizierung 132 enthalten. In der Figur 2 wird das für diese Operation zuständige Transaktionsmodul 42 schematisch dargestellt. Das Transaktionsmodul 42 wird beispielsweise als programmiertes Softwaremodul auf einem Prozessor der Vorrichtung 4 oder in Hardwareform, beispielsweise als integrierter Schaltkreis, ausgeführt. Das Transaktionsmodul 42 umfasst zum Beispiel auch zusätzliche kryptographische Funktionen, beispielsweise um den Transaktionsbeleg 190 elektronisch (digital) zu signieren. Vom Transaktionsmodul 42 können beispielsweise auch weitere übliche Funktionen, wie beispielsweise Einfügen von Transaktionsnummern, übernommen werden.

Zur Weiterverarbeitung im Schritt S5 werden die Transaktionsbelege 190 an eine Verarbeitungseinheit 23, 43 weitergeleitet. In der Figur 2 sind zwei verschiedene Varianten für die Implementation dieser Verarbeitungseinheit 23, 43 schematisch dargestellt. In einer ersten bevorzugten Variante befindet sich die Verarbeitungseinheit 23 in der Dienstzentrale 2 und die Transaktionsbelege 190 werden mittels des Kommunikationsmoduls 41 der Vorrichtung 4 über das Telekommunikationsnetz 3 an die Dienstzentrale 2 übermittelt und dort vom Kommunikationsmodul 21 entgegengenommen und der Verarbeitungseinheit 23 übergeben. In einer zweiten Variante befindet sich die Verarbeitungseinheit 43 in der Vorrichtung 4, so dass der in der Figur 1 dargestellte Schritt S5 lokal in der Vorrichtung 4 ausgeführt werden kann.

Gemäss der Figur 1 werden im Schritt S5 aus dem Transaktionsbeleg 190 die darin enthaltenen Retinamuster 180, 180' entnommen und mit Retinamustern 141 von Benutzerdatensätzen 140 aus einer Benutzerdatenbank 26 verglichen um bei einer Übereinstimmung dem betreffenden Benutzer zugeordnete Benutzerdaten 150 zu bestimmen. Je nach Ausführung können die Retinamuster zusammen mit einer zugeordneten Benutzeridentifizierung des betreffenden Benutzers in einer separaten Augenmerkmaldatenbank 61, insbesondere eine Retinadatenbank, gespeichert werden, welche beispielsweise von einer TTP-Einheit 6 (Trusted Third Party) zertifiziert wird, so dass zunächst die Benutzeridentifizierung bestimmt wird und dann die dieser Benutzeridentifizierung zugeordneten Benutzerdaten aus einer Benutzerdatenbank 26 bezogen werden, die beispielsweise von einer anderen Einheit, beispielsweise von einem Telekommunikationsnetzbetreiber, verwaltet wird. In der oben erwähnten Variante mit der lokalen Verarbeitungseinheit 43 enthält die Vorrichtung 4 beispielsweise lokale Tabellen mit Benutzerdatensätzen 140. An dieser Stelle sollte erwähnt werden, dass die Übereinstimmung der in den Transaktionsbelegen 190 enthaltenen Retinamuster 180, 180' mit den abgespeicherten Retinamustern 141 aus der Benutzerdatenbank 26, respektive einer Retinadatenbank oder einer lokalen Tabelle in der Vorrichtung 4, beispielsweise bei einer Korrelation mit einem vordefinierten minimal erforderlichen Korrelationswert gegeben sein kann. Für die Durchführung des Vergleichs kann die Verarbeitungseinheit 23, 43, welche als programmiertes Softwaremodul auf einem Prozessor der Dienstzentrale 2, respektive auf einem Prozessor der Vorrichtung 4, oder in Hardwareform, beispielsweise als integrierter Schaltkreis, in der Dienstzentrale 2, respektive der Vorrichtung 4, ausgeführt wird, beispielsweise auch Bildverarbeitungsfunktionen umfassen.

Wie in der Figur 1 illustriert wird, resultiert aus dem Schritt S5 ein Transaktionsdatensatz 160, der die übermittelten Objektdaten 130, mit der Objektidentifizierung 131 und gegebenenfalls der Objektanbieteridentifizierung 132, sowie die bestimmten Benutzerdaten 150 enthält. Die Benutzerdaten 150 enthalten beispielsweise den Namen des durch das Retinamuster 180, 180', 141 identifizierten Benutzers, dessen Zustellungsadresse, gegebenenfalls einen Zahlungsmodus und betreffende Zahlungsangaben, zum Beispiel Zahlung per Kreditkarte und zugehörige Kreditkartennummer oder Zahlung per Bankkonto und zugehörige Verrechnungsadresse, und eventuell weitere Angaben über den Benutzer, zum Beispiel dessen bevorzugte Sprache.

Der Empfang des Transaktionsbelegs 190 und gegebenenfalls die erfolgreiche Identifizierung des Benutzers auf Grund der im Transaktionsbeleg 190 enthaltenen Augenmerkmale 180, 180' können dem Benutzer beispielsweise von der Verarbeitungseinheit 23, 43 bestätigt werden und, je nach Ausführung, kann dem Benutzer die Möglichkeit gegeben werden, die Weiterbehandlung der Transaktion fortzusetzen oder abzubrechen. Die aus dem Schritt S5 resultierenden Transaktionsdatensätze 160 können von der Verarbeitungseinheit 43 in der Vorrichtung 4, respektive vom programmierten Weiterleitungsmodul 22 in der Dienstzentrale 2, an die zuständigen Einheiten weitergeleitet werden, beispielsweise können die Transaktionsdatensätze 160 über das Telekommunikationsnetz 3 an den zuständigen Objektanbieter 7, respektive Dienstleister 7, übermittelt werden, wo sie, beispielsweise ohne weitere Beteiligung der Dienstzentrale 2 oder der Vorrichtung 4, weiterbehandelt werden. Um die Transaktionsdatensätze 160 an betreffende, durch die Objektanbieteridentifizierung 132 identifizierte Objektanbieter 7 weiterzuleiten, enthält die Vorrichtung 4 beispielsweise Tabellen mit Objektanbieterdaten und die Dienstzentrale 2 umfasst, wie in der Figur 2 illustriert, eine Objektanbieter-, respektive Dienstleisterdatenbank 25.

Wie bereits oben erwähnt wurde, kann in einer alternativen Ausführungsvariante die Bestimmung der Retinamuster 180' aus den Reflexionsdaten 170 und den zugehörigen Objektbilddaten 120 in der Dienstzentrale 2 durchgeführt werden. Diese Alternative ist in der Figur 1 durch die gestrichelten Linien illustriert. Der gestrichelte Pfeil 172 stellt dar, dass die erfassten Reflexionsdaten 170 direkt (ohne Durchführung des Schritts S3) dem Schritt S4 zugeführt werden und dort zusammen mit den Objektdaten 130 in einem Transaktionsbeleg 190 verknüpft werden. Im alternativen Schritt S3', der gemäss Figur 2 im Retinabestimmungsmodul 24 der Dienstzentrale 2 ausgeführt wird, wird das Retinamuster 180' aus den im Transaktionsbeleg 190 enthaltenen Reflexionsdaten 170 und den zugehörigen, durch die im Transaktionsbeleg 190 enthaltene Objektidentifizierung 131 identifizierten Objektbilddaten 120 generiert, insbesondere mittels einer Differenzoperation, und zur Ausführung des Schritts S5 der Verarbeitungseinheit 23 übergeben. Das Retinabestimmungsmodul 24 ist beispielsweise ein programmiertes Softwaremodul, das auf einem Prozessor der Dienstzentrale 2 ausgeführt wird oder ein Hardwaremodul, beispielsweise ein integrierter Schaltkreis, oder eine Kombination der beiden.

Die Dienstzentrale 2 ist auf einem oder mehreren (vernetzten) Computern implementiert und verfügt im Kommunikationsmodul 21 über sämtliche Hard- und Softwarekomponenten, um mit anderen Einheiten über das Telekommunikationsnetz 3 zu kommunizieren, das heisst, insbesondere Daten auszutauschen, wobei zu erwähnen ist, dass das Telekommunikationsnetz 3 in der Figur 2 nur schematisch dargestellt ist und beispielsweise verschiedene Arten von Telekommunikationsnetzen umfassen kann, beispielsweise Festnetze, zum Beispiel das öffentliche geschaltete Telefonnetz, ein ISDN-Netz (Integrated Services Digital Network) oder ein IP-Netz (Internet Protocol), und Mobilnetze, zum Beispiel GSM-, UMTS- oder andere, beispielsweise satellitenbasierte Mobilfunknetze.

Die Komponenten der Vorrichtung 4 können in einem gemeinsamen Gehäuse integriert werden, sie können aber auch in verschiedenen miteinander verbundenen Gehäusen implementiert werden. Zum Beispiel kann insbesondere das Kommunikationsmodul 41 durch ein bereits bestehendes herkömmliches Kommunikationsendgerät, beispielsweise ein kommunikationsfähiger Personal Computer oder insbesondere ein Mobilfunkgerät, beispielsweise ein Mobilfunktelefon oder ein kommunikationsfähiger Palm- oder Laptop-Computer, realisiert werden, welches über eine drahtgebundene oder drahtlose Schnittstelle mit den anderen Komponenten der Vorrichtung 4 verbunden ist. Diese anderen Komponenten der Vorrichtung 4 können beispielsweise in einem Gehäuse oder auf einem geeigneten Träger so ausgestaltet werden, dass sie vom Benutzer wie eine herkömmliche Brille aufgesetzt werden können. An dieser Stelle sollte zudem erwähnt werden, dass insbesondere die Komponenten der virtuellen retinalen Anzeigevorrichtung 46 mit dem Scanner 47 aber beispielsweise auch das Transaktionsmodul 42, das Retinabestimmungsmodul 44 und das Datenerstellungsmodul 45 auf einem gemeinsamen Chip integriert werden können, so dass die in der Figur dargestellten Schritte S1, S2, S3 und S4 durch Komponenten eines einzigen Chips ausgeführt werden können, was insbesondere auch Sicherheitsvorteile hat, da die Datensätze in einem einzigen Chip unmanipulierbar verarbeitet werden und der resultierende Transaktionsbeleg 190 in diesem Chip beispielsweise auch (elektronisch) signiert werden kann.

An dieser Stelle sollte erwähnt werden, dass wie bereits erwähnt, die Augenmerkmale nicht bloss Retinamuster 180, 180' sondern auch Merkmale von anderen Augenteilen, beispielsweise Muster der Iris 53 sein können, und dass die Objektbilddaten 120 nicht nur durch direkte Projektion entsprechender Bildsignale 121 auf die Retina 51 des Benutzers sichtbar gemacht werden können, sondern, dass dies auch durch andere konventionelle Anzeigemethoden, beispielsweise mittels Bildröhren, LCD-Anzeigen oder geeigneter stereoskopartigen Anzeigen, erreicht werden kann. Es sollte zudem auch erwähnt werden, dass in dieser Beschreibung nicht näher auf weitere in Transaktionsverfahren übliche Merkmale, wie beispielsweise Verschlüsselung/Entschlüsselung von über Telekommunikationsnetze 3 übertragenen Daten, Authentifizierung der Dienstzentrale 2 und anderen am Transaktionsverfahren beteiligten Einheiten, oder Protokolle für Auftragsbestätigung, Verrechnung oder Backup/Recovery-Prözeduren, eingegangen wurde, da diese vom Fachmann in bekannter Weise realisiert werden können.

Neben dem Verkauf oder der Vermietung von beschriebenen Dienstzentralen 2 und/oder festinstallierbaren Vorrichtungen 4 an interessierte Betreiber und von beschriebenen (insbesondere mobilen) Vorrichtungen 4 an interessierte Benutzer, können interessierten Benutzern auch Teilmodule verkauft werden, insbesondere die oben erwähnten Komponenten, die in einem Gehäuse oder auf einem geeigneten Träger ausgeführt sind und über eine geeignete Schnittstelle mit einem herkömmlichen, bereits vorhandenen Kommunikationsendgerät verbunden werden können, um das bereits vorhandene Kommunikationsendgerät auf eine beschriebene Vorrichtung 4 zu erweitern. An interessierte Hersteller können zudem die oben erwähnten Chips zur Herstellung von Vorrichtungen 4 oder von den beschriebenen Teilmodulen verkauft werden. Betreiber einer Dienstzentrale 2 können beispielsweise von einem Objektanbieter für jede über ihre Dienstzentrale 2 abgewickelte Transaktion, die ein Transaktionsobjekt 110 dieses Objektanbieters 7 betrifft, eine Gebühr verrechnen.

## Patentansprüche

1. Transaktionsverfahren, in welchem Objektbilddaten (120), die ein Transaktionsobjekt (110), beispielsweise ein Produkt oder eine Dienstleistung, betreffen, für einen Benutzer sichtbar gemacht werden, in welchem Augenmerkmale (180) des Benutzers bestimmt werden und in welchern die bestimmten Augenmerkmale (180) mit Objektdaten (130), die das Transaktionsobjekt (110) betreffen, und die mindestens eine Objektidentifizierung (131) des Transaktionsobjekts (110) enthalten, in einem Transaktionsbeleg (190) verknüpft werden und der Transaktionsbeleg (190) an eine Verarbeitungseinheit (23, 43) geleitet wird, **dadurch gekennzeichnet,**
**dass** die Augenmerkmale (180) des Benutzers bestimmt werden, während die sichtbar gemachten Objektbilddaten (120) durch den Benutzer betrachtet werden.

2. Transaktionsverfahren gemäss Anspruch 1, **dadurch gekennzeichnet, dass** die Objektbilddaten (120) für den Benutzer sichtbar gemacht werden, indem den Objektbilddaten (120) entsprechende Bildsignale (121) direkt auf die Retina (51) des Benutzers projiziert werden.

3. Transaktionsverfahren gemäss einem der Ansprüche 1 oder 2, **dadurch gekennzeichnet, dass** die Augenmerkmale (180) dadurch bestimmt werden, dass von Augenteilen (51) reflektiertes Licht (171) mindestens in einem Teilgebiet dieser Augenteile (51) erfasst und einem lichtempfindlichen Element (472) zugeführt wird.

4. Transaktionsverfahren gemäss einem der Ansprüche 2 oder 3, **dadurch gekennzeichnet, dass** die Augenmerkmale mindestens das Retinamuster (180) von einer Retina (51) des Benutzers umfassen, dass Reflexionsdaten (170) aus erfasstem Licht (171) bestimmt werden, welches Licht (171) durch die Retina (51) auf Grund der projizierten Bildsignale (121) reflektiert wird, und dass das Retinamuster (180) aus den bestimmten Reflexionsdaten (170) und den zugehörigen Objektbilddaten (120) bestimmt wird.

5. Transaktionsverfahren gemäss einem der Ansprüche 2 oder 3, **dadurch gekennzeichnet, dass** die Augenmerkmale mindestens das Retinamuster (180) von einer Retina (51) des Benutzers umfassen, welches Retinamuster (180) aus erfasstem Licht (171) bestimmt wird, welches Licht (171) durch die Retina (51) auf Grund von projiziertem Licht reflektiert wird, welches projizierte Licht andere Wellenlängen umfasst als die Bildsignale (121).

6. Transaktionsverfahren gemäss einem der Ansprüche 1 bis 5, **dadurch gekennzeichnet, dass** in der Verarbeitungseinheit (23, 43) Benutzerdaten (150), die den Augenmerkmalen (180) zugeordnet sind, bestimmt werden.

7. Transaktionsverfahren gemäss einem der Ansprüche 1 bis 6, **dadurch gekennzeichnet, dass** die Objektdaten (130) zusätzlich eine Objektanbieteridentifizierung (132) enthalten.

8. Transaktionsverfahren gemäss einem der Ansprüche 1 bis 7, **dadurch gekennzeichnet, dass** die Transaktionsbelege (190) über ein Telekommunikationsnetz (3) an eine Verarbeitungseinheit (23) in einer Dienstzentrale (2) übermittelt werden.

9. Transaktionsverfahren gemäss einem der Ansprüche 1 bis 8, **dadurch gekennzeichnet, dass** die Objektbilddaten (120) über ein Telekommunikationsnetz (3) von einer Dienstzentrale (2) bezogen werden.

10. Vorrichtung (4), welche Anzeigemittel (46) umfasst, um einem Benutzer Objektbilddaten (120), die ein Transaktionsobjekt (110), beispielsweise ein Produkt oder eine Dienstleistung, betreffen, sichtbar zu machen, welche Mittel (47) zur Bestimmung von Augenmerkmalen (180) des Benutzers umfasst und welche Mittel (42) umfasst, um die bestimmten Augenmerkmale (180) mit Objektdaten (130), die das Transaktionsobjekt (110) betreffen, in einem Transaktionsbeleg (190) zu verknüpfen, wobei die Objektdaten mindestens eine Objektidentifizierung (131) enthalten, und um den Transaktionsbeleg (190) an eine Verarbeitungseinheit weiterzuleiten, **dadurch gekennzeichnet,**
**dass** die Vorrichtung so beschaffen ist, dass die Augenmerkmale (180) bestimmt werden, während die sichtbar gemachten Objektbilddaten (120) durch den Benutzer betrachtet werden.

11. Vorrichtung (4) gemäss Anspruch 10, **dadurch gekennzeichnet, dass** die Anzeigemittel (46) eine retinale Anzeigevorrichtung umfassen, welche retinale Anzeigevorrichtung (46) die Objektbilddaten (120) für den Benutzer sichtbar macht, indem sie den Objektbilddaten (120) entsprechende Bildsignale (121) direkt auf die Retina (51) des Benutzers projiziert.

12. Vorrichtung (4) gemäss einem der Ansprüche 10 oder 11, **dadurch gekennzeichnet, dass** die Mittel zur Bestimmung von Augenmerkmalen (180) einen Scanner (47) umfassen, um von Augenteilen (51) reflektiertes Licht (171) mindestens in einem Teilgebiet dieser Augenteile (51) zu erfassen.

13. Vorrichtung (4) gemäss Anspruch 12, **dadurch gekennzeichnet, dass** der Scanner (47) so beschaffen ist, dass er mindestens das von einer Retina (51) des Benutzers reflektierte Licht (171) erfasst, welches Licht (171) durch die Retina (51) auf Grund der projizierten Bildsignale (121) reflektiert wird, und dass die Vorrichtung (4) ein Retinabestimmungsmodul (44) umfasst, um mindestens das Retinamuster (180) von einer Retina (51) aus erfassten Reflexionsdaten (170), welche dem erfassten Licht (171) entsprechen, und den zugehörigen Objektbilddaten (120) zu bestimmen.

14. Vorrichtung (4) gemäss Anspruch 12, **dadurch gekennzeichnet, dass** der Scanner (47) eine Lichtquelle umfasst, welche Lichtquelle Licht ausstrahlt, das andere Wellenlängen umfasst als die Bildsignale (121), und dass der Scanner (47) so beschaffen ist, dass er mindestens das von einer Retina (51) des Benutzers reflektierte Licht (171) erfasst, welches Licht (171) durch die Retina (51) auf Grund von projiziertem Licht aus der Lichtquelle reflektiert wird.

15. Vorrichtung (4) gemäss einem der Ansprüche 10 bis 14, **dadurch gekennzeichnet, dass** sie die Verarbeitungseinheit (43) umfasst, welche Verarbeitungseinheit (43) Benutzerdaten (150), die den Augenmerkmalen (180) zugeordnet sind, bestimmt.

16. Vorrichtung (4) gemäss einem der Ansprüche 10 bis 15, **dadurch gekennzeichnet, dass** sie ein Kommunikationsmodul (41) umfasst, um die Transaktionsbelege (190) über ein Telekommunikationsnetz (3) an eine Verarbeitungseinheit (23) in einer Dienstzentrale (2) zu übermitteln.

17. Vorrichtung gemäss Anspruch 16, **dadurch gekennzeichnet, dass** das Kommunikationsmodul (41) die Objektbilddaten (120) über ein Telekommunikationsnetz (3) von einer Dienstzentrale (2, 7) bezieht.

## Claims

1. Transaction method in which object picture data (120) relating to a transaction object (110), for example a product or a service, are made visible to a user, in which eye features (180) of the user are determined and in which the determined eye features (180) are linked in a transaction record (190) to object data (130) relating to the transaction object (110) and containing at least an object identification (131) of the transaction object (110), and the transaction record (190) is transmitted to a processing unit (23, 43), **characterised in that**
the eye features (180) of the user are determined while the object picture data (120), made visible, is being viewed by the user.

2. Transaction method according to claim 1, **characterised in that** the object picture data (120) are made visible to the user by picture signals (121) corresponding to the object picture data (120) being projected directly on the retina (51) of the user.

3. Transaction method according to one of the claims 1 or 2, **characterised in that** the eye features (180) are determined by light (171) reflected by eye parts (51) being captured in at least a partial region of these eye parts (51) and being conducted to a light-sensitive element (472).

4. Transaction method according to one of the claims 2 or 3, **characterised in that** the eye features include at least the retinal pattern (180) of one retina (51) of the user, reflection data (170) are determined from the captured light (171), which light (171) is reflected by the retina (51) on the basis of the projected the picture signals (121), and the retinal pattern (180) is determined from the determined reflection data (170) and the associated the object picture data (120)

5. Transaction method according to one of the claims 2 or 3, **characterised in that** the eye features include at least the retinal pattern (180) of one retina (51) of the user, which retinal pattern (180) is determined from captured light (171), which light (171) is reflected by the retina (51) on the basis of projected light, which projected light contains other wavelengths than the picture signals (121).

6. Transaction method according to one of the claims 1 to 5, **characterised in that** determined in the processing unit (23, 43) are user data (150), which are associated with the eye features (180).

7. Transaction method according to one of the claims 1 to 6, **characterised in that** the object data (130) further contain an object provider identification (132).

8. Transaction method according to one of the claims 1 to 7, **characterised in that** the transaction records (190) are transmitted via a telecommunications network (3) to a processing unit (23) in a service centre (2).

9. Transaction method according to one of the claims 1 to 8, **characterised in that** the object picture data (120) are obtained from a service centre (2) over a telecommunications network (3).

10. Device (4) having display means (46) to make visible to a user object picture data (120) relating to a transaction object (110), for example a product or a service, which device includes means (47) for determining eye features (180) of the user and includes means (42) of linking in a transaction record (190) the determined eye features (180) with object data (130) relating to the transaction object (110), the object data containing at least an object identification (131), and of forwarding the transaction record (190) to a processing unit, **characterised in that**
the device is designed such that the eye features (180) are determined while the object picture data (120), made visible, are being viewed by the user.

11. Device (4) according to claim 10, **characterised in that** the display means (46) include a retinal display device, which retinal display device (46) makes visible to the user the object picture data (120) by projecting picture signals (121) corresponding to the object picture data (120) directly on the retina (51) of the user.

12. Device (4) according to one of the claims 10 or 11, **characterised in that** the means for determining eye features (180) include a scanner (47) to capture light (171) reflected by eye parts (51) at least in a partial region of these eye parts (51).

13. Device (4) according to claim 12, **characterised in that** the scanner (47) is designed such that it captures at least the light (171) reflected by one retina (51) of the user, which light (171) is reflected by the retina (51) on the basis of the projected the picture signals (121), and the device (4) includes a retina determining module (44) to determine at least the retinal pattern (180) of one retina (51) from captured reflection data (170) corresponding to the captured light (171) and from the associated the object picture data (120).

14. Device (4) according to claim 12, **characterised in that** the scanner (47) includes a light source, which light source beams light containing other wavelengths than the picture signals (121), and the scanner (47) is designed such that it captures at least the light (171) reflected by one retina (51) of the user, which light (171) is reflected by the retina (51) on the basis of projected light from the light source.

15. Device (4) according to one of the claims 10 to 14, **characterised in that** it includes the processing unit (43), which processing unit (43) determines user data (150) which are associated with the eye features (180).

16. Device (4) according to one of the claims 10 to 15, **characterised in that** it includes a communications module (41) to transmit the transaction records (190) via a telecommunications network (3) to a processing unit (23) in a service centre (2).

17. Device according to claim 16, **characterised in that** the communications module (41) obtains the object picture data (120) from a service centre (2, 7) via a telecommunications network (3).

## Revendications

1. Procédé de transaction dans lequel des données d'image d'objet (120) qui concernent un objet de transaction (110), par exemple un produit ou un service, sont rendues visibles pour un utilisateur, dans lequel des caractéristiques oculaires (180) de l'utilisateur sont définies et dans lequel les caractéristiques oculaires définies (180) sont associées, dans un justificatif de transaction (190), à des données d'objet (130) qui concernent l'objet de transaction (110) et qui contiennent au moins une indentification de l'objet (131) de l'objet de transaction (110) et le justificatif de transaction (190) est transmis à une unité de traitement (23, 43), **caractérisé**
**en ce que** les caractéristiques oculaires (180) de l'utilisateur sont définies pendant que les données d'image d'objet rendues visibles (120) sont observées par l'utilisateur.

2. Procédé de transaction selon la revendication 1, **caractérisé en ce que** les données d'image d'objet (120) sont rendues visibles pour l'utilisateur dans le fait que des signaux d'image (121) correspondant aux données d'image d'objets (120) sont directement projetés sur la rétine (51) de l'utilisateur.

3. Procédé de transaction selon l'une des revendications 1 ou 2, **caractérisé en ce que** les caractéristiques oculaires (180) sont définies par le fait que la lumière réfléchie par des parties (51) de l'oeil est saisie au moins dans une zone partielle de ces parties oculaires (51) et est amenée à un élément photosensible.

4. Procédé de transaction selon l'une des revendications 2 ou 3, **caractérisé en ce que** les caractéristiques oculaires comportent au moins le modèle de rétine (180) d'une rétine (51) de l'utilisateur, **en ce que** les données de réflexion (170) sont déterminées à partir de la lumière interceptée (171), lumière (171) qui est réfléchie par la rétine (51) sur la base des signaux d'image projetés (121), et **en ce que** le modèle de rétine (180) est déterminé à partir des données de réflexion définies (170) et des données d'image d'objet associées (120).

5. Procédé de transaction selon l'une des revendications 2 ou 3, **caractérisé en ce que** les caractéristiques oculaires comportent au moins le modèle (180) d'une rétine (51) de l'utilisateur, **en ce que** le modèle de rétine (180) est déterminé à partir de la lumière réfléchie (171), lumière (171) qui est réfléchie par la rétine (51) sur la base de la lumière projetée, la lumière projetée comprenant d'autres longueurs d'ondes que les signaux d'image (121).

6. Procédé de transaction selon l'une des revendications 1 à 5, **caractérisé en ce que** des données d'utilisateur (150), qui sont associées aux caractéristiques oculaires (180), sont définies dans l'unité de traitement (23, 43).

7. Procédé de transaction selon l'une des revendications 1 à 6, **caractérisé en ce que** les données d'objet (130) comprennent en supplément une identification de prestataire (132).

8. Procédé de transaction selon l'une des revendications 1 à 7, **caractérisé en ce que** les justificatifs de transaction (190) sont transmis par un réseau de télécommunication (3) à une unité de traitement (23) dans une centrale de service (2).

9. Procédé de transaction selon l'une des revendications 1 à 8, **caractérisé en ce que** les données d'image d'objet (120) sont obtenues depuis une centrale de service (2) par l'intermédiaire d'un réseau de télécommunication (3).

10. Dispositif (4) qui comprend des moyens d'affichage (46) pour rendre visible à un utilisateur des données d'image d'objet (120) qui concernent un objet de transaction (110) par exemple un produit ou un service, qui comprend des moyens (47) pour la détermination de caractéristiques oculaires (180) de l'utilisateur et qui comprend des moyens (42) pour associer dans un justificatif de transaction (190) les caractéristiques oculaires définies (180) à des données d'objet (130) qui concernent l'objet de transaction (110), les données d'objet comprenant au moins une identification d'objet (131), et pour transmettre le justificatif de transaction (190) à une unité de traitement, **caractérisé en ce que** le dispositif est conçu de manière à définir les caractéristiques oculaires (180) pendant que les données d'image d'objet (120) rendues visibles sont observées par l'utilisateur.

11. Dispositif (4) selon la revendication 10, **caractérisé en ce que** les moyens d'affichage (46) comprennent un dispositif d'affichage rétinal, dispositif d'affichage rétinal (46) qui rend visible les données d'image d'objet (120) pour l'utilisateur en projetant des signaux d'image (121), correspondant aux données d'image d'objet (120) directement sur la rétine (51) de l'utilisateur.

12. Dispositif (4) selon l'une des revendications 10 ou 11, **caractérisé en ce que** les moyens pour déterminer les caractéristiques oculaires (180) comprennent un scanner (47) pour saisir la lumière réfléchie (171) par des parties (51) de l'oeil au moins dans une zone partielle de ces parties (51) de l'oeil.

13. Dispositif (4) selon la revendication 12, **caractérisé en ce que** le scanner (47) est conçu de manière à saisir au moins la lumière (171) réfléchie par une rétine (51) de l'utilisateur, lumière (171) qui est réfléchie par la rétine (51) sur la base des signaux d'image projetés (121), et **en ce que** le dispositif (4) comprend un modèle de détermination de rétine (44) pour déterminer au moins le modèle (180) d'une rétine (51) de l'utilisateur à partir des données de réflexion saisies (170), qui correspondent à la lumière saisie (171), et des données d'images d'objet associées (120).

14. Dispositif (4) selon la revendication 12, **caractérisé en ce que** le scanner (47) comprend une source de lumière, source de lumière qui émet de la lumière qui contient d'autres longueurs d'ondes que les signaux d'image (121) et **en ce que** le scanner (47) est conçu de manière à capter au moins la lumière (171) réfléchie par une rétine (51) de l'utilisateur, lumière (171) qui est réfléchie par la rétine (51) sur la base de la lumière projetée par la source de lumière.

15. Dispositif (4) selon l'une des revendications 10 à 14, **caractérisé en ce qu'**il comprend l'unité de traitement (43), unité de traitement (43) qui détermine des données d'utilisateur (150) qui sont associées aux caractéristiques oculaires (180).

16. Dispositif (4) selon l'une des revendications 10 à 15, **caractérisé en ce qu'**il comprend un module de communication (41) pour transmettre les justificatifs de transaction (190) par un réseau de télécommunication (3) à une unité de traitement (23) se trouvant dans la centrale de service (2).

17. Dispositif (4) selon la revendication 16, **caractérisé en ce que** le module de communication (41) obtient les données d'image d'objet (120) par l'intermédiaire d'un réseau de télécommunication (3) depuis une centrale de service (2,7).
